# EUROPEAN PATENT APPLICATION

(11) **EP 4 742 077 A1**
(43) Date of publication of application: **13.05.2026**
(21) Application number: 23947903.3
(22) Date of filing: 07.08.2023
(51) Int. Cl.: G06F 30/20

(54) **ENGINEERING TEMPLATE CREATION METHOD AND APPARATUS, ENGINEERING PROJECT CONSTRUCTION METHOD AND APPARATUS, AND STORAGE MEDIUM**

(71) Applicant: Siemens Aktiengesellschaft, 80333 München (DE)
(72) Inventor: ZOU, Wenchao, Shanghai 200082 (CN); WU, Heping, Shanghai 200082 (CN); TANG, Youhua, Shanghai 200082 (CN); JIA, Shaotu, Shanghai 200082 (CN); ZHANG, Jiarui, Shanghai 200082 (CN)
(74) Representative: Isarpatent
(86) International application number: PCT/CN2023/111519
(87) International publication number: WO 2025/030322

(57) **Abstract**

An engineering template creation method and apparatus, an engineering project construction method and apparatus, and a computer-readable storage medium are provided in embodiments of this application. The engineering template creation method includes: obtaining a plurality of engineering projects between which a similarity meets a set requirement; generating a graph structure for each engineering project, where the graph structure includes a node that represents each engineering object in the engineering project and an arrow that represents a mapping relationships between the engineering objects; finding a maximum common sub-graph among all graph structures, and a maximum directional difference sub-graph between every two of the graph structures; using the maximum common sub-graph as a basic engineering template; and determining, based on the maximum directional difference sub-graphs, at least one correspondence between an engineering object serving as an input condition and an engineering object serving as an output result, and determining a candidate extended branch of the basic engineering template based on each correspondence. Through technical solutions in the embodiments of this application, modular engineering can be implemented.

## Description

### TECHNICAL FIELD

This application relates to the field of industrial technologies, and in particular, to an engineering template creation method, an engineering project construction method, an engineering template creation apparatus, an engineering project construction apparatus, and a computer-readable storage medium.

### BACKGROUND

Most existing modular engineering is implemented based on predefined templates that can be modified by engineering users. However, such predefined templates are typically manually compiled by experts in the field. This not only requires extensive professional expertise but also takes a long time. Even for the experts, constructing templates poses a considerable challenge when system complexity is relatively high. In addition, most templates are fixed and cannot be automatically modified based on user requirements, and can only be manually modified by an engineer based on a requirement of the engineer. Moreover, many engineering suppliers, such as an engineering, procurement, and construction (EPC) contractor and a system integrator, have a large quantity of past projects. If these projects cannot be reused, they will no longer generate profits for these companies, since not all companies are capable of creating a usable template library from their past projects on their own.

Therefore, a person skilled in the art is still devoted to finding another implementation solution of modular engineering.

### SUMMARY

In view of this, in embodiments of this application, in an aspect, an engineering template creation method and an engineering project construction method are provided, and in another aspect, an engineering template creation apparatus, an engineering project construction apparatus, and a computer-readable storage medium are provided, thereby implementing modular engineering.

To resolve the foregoing technical problem, technical solutions of this application are implemented as follows.

An engineering template creation method includes: obtaining a plurality of engineering projects between which a similarity meets a set requirement; generating a graph structure for each engineering project, where the graph structure includes a node that represents each engineering object in the engineering project and an arrow that represents a mapping relationships between the engineering objects; finding a maximum common sub-graph among all graph structures, and a maximum directional difference sub-graph between every two of the graph structures; using the maximum common sub-graph as a basic engineering template; and determining, based on the maximum directional difference sub-graphs, at least one correspondence between an engineering object serving as an input condition and an engineering object serving as an output result, and determining a candidate extended branch of the basic engineering template based on each correspondence.

An engineering project construction method, including: outputting a basic engineering template in response to an engineering project construction instruction with default input condition from a user; and outputting the basic engineering template and a corresponding extended branch in response to an engineering project construction instruction with an input condition from the user, where the extended branch includes an engineering object serving as an output result that corresponds to an engineering object serving as the input condition, the basic engineering template is determined based on a maximum common sub-graph between graph structures corresponding to a plurality of engineering projects between which a similarity meets a set requirement, and a correspondence between the engineering object serving as the input condition and the engineering object serving as the output result is determined based on a maximum directional difference sub-graph between every two of graph structures corresponding to the plurality of engineering projects between which the similarity meets the set requirement.

An engineering template creation apparatus, including: a first module, configured to obtain a plurality of engineering projects between which a similarity meets a set requirement; a second module, configured to generate a graph structure for each engineering project, where the graph structure includes a node that represents each engineering object in the engineering project and an arrow that represents a mapping relationships between the engineering objects; a third module, configured to find a maximum common sub-graph among all graph structures, and a maximum directional difference sub-graph between every two of the graph structures; and a fourth module, configured to use the maximum common sub-graph as a basic engineering template; and determine, based on the maximum directional difference sub-graphs, at least one correspondence between an engineering object serving as an input condition and an engineering object serving as an output result, and determine a candidate extended branch of the basic engineering template based on each correspondence.

An engineering project construction apparatus, including: a fourth module, including a basic engineering template and at least one correspondence between an engineering object serving as an input condition and an engineering object serving as an output result, and configured to determine a candidate extended branch of the basic engineering template based on each correspondence, where the basic engineering template is determined based on a maximum common sub-graph between graph structures corresponding to a plurality of engineering projects between which a similarity meets a set requirement, and the at least one correspondence between the engineering object serving as the input condition and the engineering object serving as the output result is determined based on a maximum directional difference sub-graph between every two of graph structures corresponding to the plurality of engineering projects between which the similarity meets the set requirement; and a fifth module, configured to output a basic engineering template in response to an engineering project construction instruction with default input condition from a user, and output the basic engineering template and a corresponding extended branch in response to an engineering project construction instruction with an input condition from the user, where the extended branch includes an engineering object serving as an output result that corresponds to an engineering object serving as the input condition.

An engineering template creation apparatus, including at least one memory and at least one processor, where the at least one memory is configured to store a computer program, and the at least one processor is configured to invoke the computer program stored in the at least one memory, to perform the engineering template creation method as described above.

An engineering project construction apparatus, including at least one memory and at least one processor, where the at least one memory is configured to store a computer program, and the at least one processor is configured to invoke the computer program stored in the at least one memory, to perform the engineering project construction method as described above.

A computer-readable storage medium is provided, storing a computer program. The computer program can be executed by a processor to implement the engineering template creation method or the engineering project construction method as described above.

It may be learned from the foregoing technical solutions that in the embodiments of this application, a plurality of engineering projects between which a similarity meets a set requirement is predetermined, a maximum common sub-graph is found based on graph structures of the engineering projects, a maximum directional difference sub-graph is obtained through comparison of every two of the graph structures, then the maximum common sub-graph is used as a basic engineering template, a correspondence between an engineering object serving as an input condition and an engineering object serving as an output result is determined based on the maximum directional difference sub-graph, a candidate extended branch of the basic engineering template is determined based on the correspondence, and then a new engineering project may be constructed based on the basic engineering template and the extended branch, thereby implementing modular engineering. In addition, since the engineering template is constructed based on an existing engineering project, not only the existing engineering project is fully used, but also automatic creation of templates is implemented, thereby reducing dependence of engineering template creation on technical personnel such as experts.

### BRIEF DESCRIPTION OF THE DRAWINGS

To better understand this application, embodiments of this application are described in detail below with reference to accompanying drawings, so that a person of ordinary skill in the art better understands the above and other features and advantages of this application. In the accompanying drawings:
FIG. 1 is an exemplary flowchart of an engineering template creation method according to an embodiment of this application;
FIG. 2A to FIG. 2C are schematic diagrams of graph structures of three "feeding line" engineering projects between which a similarity meets a set requirement in an example of this application;
FIG. 3A to FIG. 3I are schematic diagrams of a maximum common sub-graph and a maximum directional difference sub-graph obtained based on comparison of every two of graph structures of three "feeding line" engineering projects shown in FIG. 2A to FIG. 2C in an example of this application;
FIG. 4 is a schematic diagram of a maximum common sub-graph among all graph structures in an example of this application;
FIG. 5A to FIG. 5D are each a schematic diagram of constructing an engineering project based on an engineering template in this embodiment in an example;
FIG. 6 is a flowchart of a detailed implementation of an engineering template creation process and an engineering project construction process in an example of this application;
FIG. 7 is an exemplary structural diagram of an engineering template creation apparatus according to an embodiment of this application;
FIG. 8 is an exemplary structural diagram of an engineering project construction apparatus according to an embodiment of this application;
FIG. 9 is an exemplary structural diagram of another engineering template creation apparatus according to an embodiment of this application; and FIG. 10 is an exemplary structural diagram of another engineering project construction apparatus according to an embodiment of this application.

Reference numerals are as follows:

| Reference numerals | Meaning |
|---|---|
| S12, S14, S16, S18 | Step |
| 1 | Feeding line |
| 11 | Engineering equipment information |
| 111 | Bin |
| 112 | Motor |
| 1121 | Motor type |
| 11211 | Constant speed |
| 11212 | Variable speed |
| 1122 | Protocol |
| 11221 | Ethernet |
| 113 | Sensor |
| 12 | Engineering requirement information |
| 121 | Farm size |
| 1211 | Greater than 1000 |
| 1212 | 500-1000 |
| 122 | Livestock type |
| 1221 | Type B |
| 1222 | Type A |
| 701 | First module |
| 702 | Second module |
| 703 | Third module |
| 704 | Fourth module |
| 801 | Fifth module |
| 901, 1001 | Memory |
| 902, 1002 | Processor |
| 903, 1003 | Bus |

### DETAILED DESCRIPTION

In embodiments of this application, to reduce dependence of engineering template creation on technical personnel such as experts, it is considered to provide an automatic engineering template creation scheme. In addition, to fully use past engineering projects, it is considered in the scheme to create a corresponding engineering template through analysis and summarization of existing engineering projects.

To make objectives, technical solutions, and advantages of this application clearer, the technical solutions of this application are described in detail below with reference to the accompanying drawings and embodiments.

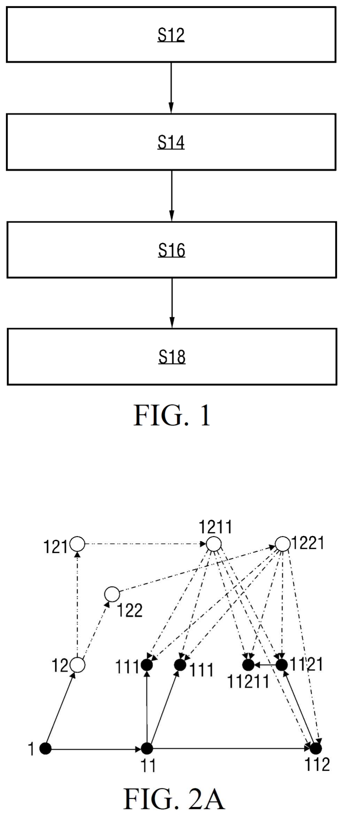

FIG. 1 is an exemplary flowchart of an engineering template creation method according to an embodiment of this application. As shown in FIG. 1, the method may include the following steps.

Step S12: Obtain a plurality of engineering projects between which a similarity meets a set requirement.

In a specific implementation, the similarity between the engineering projects may be determined through a plurality of methods. For example, in an implementation, the engineering projects may be compared for predetermined comparison items, and the engineering projects between which a result of the comparison meets the set requirement are determined as the engineering projects between which the similarity meets the set requirement.

In an example, the predetermined comparison items may include an engineering software library, an engineering function, an engineering object, and/or an engineering parameter used in each of the engineering projects. Correspondingly, the engineering projects may be compared in terms of the following aspects:
(1) Comparison in terms of the engineering software library: Whether the compared engineering projects use a same engineering software library. When a difference in the use of the engineering software library is excessively large, functions of the compared engineering projects are completely different, causing the comparison to be impossible. For example, if an engineering project A uses STMATIC Robot Library, and an engineering project B uses Library SIMATIC Kinematics, the two engineering projects cannot be compared. If none of the compared engineering projects uses a standard software library, the 2^{nd} step is directly performed.
(2) Comparison in terms of the engineering functions: Whether the compared engineering projects implements a same function. The engineering projects with different functions do not need to be compared. If the engineering project A implements a "feeding line", and the engineering project B implements "environment control", the two engineering projects cannot be compared.
(3) Comparison in terms of engineering objects: Whether the compared engineering projects are constructed based on a specific quantity of same engineering objects. When a difference in the engineering objects is excessively large, the compared engineering projects may have completely different functions and purposes, causing the comparison to be impossible. If an engineering project A implements an agricultural "primary feeding line" with functions targeting a "motor", a "bin", and a "flow sensor", an engineering project B implements an agricultural "primary feeding line" with functions targeting the "motor", the "bin", and a "weigher", and an engineering project C implements an agricultural "secondary feeding line" with functions targeting the "motor", a "hopper", an "object detection sensor", and an "on-off valve", comparability between the engineering project C and the engineering projects A and B is less than the comparability between the engineering project A and the engineering project B.
(4) Comparison in terms of engineering parameters: Many parameters are repeatedly used in an engineering project. When project parameters are different, comparability decreases. For example, a parameter list of the engineering project A includes: six joint values of a robot: a value of a joint 1, ..., and a value of a joint 6, and a parameter list of an engineering project B includes: spatial coordinates of the robot, x, y, z, yaw (that is, rotation about the x-axis), pitch (that is, rotation about the y-axis), and roll (that is, rotation about the z-axis). Therefore, the comparability between the two engineering projects has decreased.

In some examples, only one of the engineering object and the engineering parameter may be compared, and in some examples, both may be compared.

The foregoing comparisons may be performed based on a method such as a list or a matrix. A threshold corresponding to a comparison result, that is, a degree of similarity that needs to be met, may be set in advance, may be specified by a user, or may be adjusted as required.

It may be learned that in the example, the engineering projects between which the result of the comparison meets the set requirement may be: engineering projects that use a same engineering software library, implement a same engineering function, have more than a set first quantity of same engineering objects, and/or have more than a set second quantity of same engineering parameters; and/or engineering projects that do not use a standard engineering software library, implement the same engineering function, have more than the set first quantity of same engineering objects, and/or have more than the set second quantity of same engineering parameters.

Step S14: Generate a graph structure for each of the engineering projects, where the graph structure includes a node that represents each engineering object in the engineering project and an arrow that represents a mapping relationship between the engineering objects.

In this step, a graph generator may be used to convert the engineering project into a corresponding graph structure.

FIG. 2A to FIG. 2C show graph structures of three "feeding line" engineering projects between which a similarity meets a set requirement in an example. In this example, an engineering object may include engineering equipment information, engineering equipment attribute information, engineering equipment configuration information engineering requirement information. A solid node and an arrow connection thereof represent equipment information, equipment attribute information, and equipment configuration information, and a hollow node and an arrow connection thereof represent requirement information. An arrow connection between the hollow node and the solid node represents an initialized connection between the requirement information and information such as the equipment attribute information and the equipment configuration information. It may be learned that a mapping relationship between the engineering objects may include: a mapping relationship between the engineering equipment information and the engineering equipment attribute information, a mapping relationship between the engineering equipment attribute information and the engineering equipment configuration information, a mapping relationship between the engineering requirement information and the engineering equipment information, a mapping relationship between the engineering requirement information and the engineering equipment attribute information, and a mapping relationship between the engineering requirement information and the engineering equipment configuration information.

As shown in FIG. 2A, a feeding line 1 of an engineering project A has engineering equipment information 11 and engineering requirement information 12. The engineering equipment information 11 may include two bins 111 and a motor 112. The motor 112 has attribute information of a motor type 1121, and configuration information thereof is a constant speed 11211. The engineering requirement information 12 may include a farm size 121 and a livestock type 122. The farm size 121 is greater than 1000 (numbered 1211 in the figure), and the livestock type 122 is a type B (numbered 1221 in the figure). The farm size of greater than 1000 and the livestock type of the type B may result in a requirement for two bins 111 and a motor 112, and the motor type 1121 is the constant speed 11211.

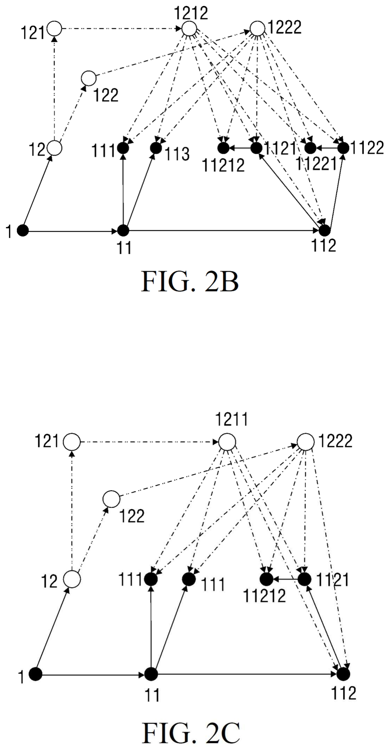

As shown in FIG. 2B, a feeding line 1 of an engineering project B has engineering equipment information 11 and engineering requirement information 12. The engineering equipment information 11 may include a bin 111, a motor 112, and a sensor 113. The motor 112 has two pieces of attribute information, which are a motor type 1121 and a protocol 1122. Configuration information of the motor type 1121 is a variable speed 11212, and configuration information of the protocol 1122 is an Ethernet protocol 11221. The engineering requirement information 12 may include a farm size 121 and a livestock type 122. The farm size 121 ranges from 500 to 1000 (numbered 1212 in the figure), and the livestock type 122 is a type A (numbered 1222 in the figure). The farm size ranges from 500 to 1000 and the livestock type of the type A may result in a requirement for one bin 111, one sensor 113, and one motor 112, the motor type 1121 is the variable speed 11212, and the protocol 1122 is the Ethernet protocol 11221.

As shown in FIG. 2C, a feeding line 1 of an engineering project C has engineering equipment information 11 and engineering requirement information 12. The engineering equipment information 11 may include two bins 111 and a motor 112. The motor 112 has attribute information of a motor type 1121, and configuration information thereof is a variable speed 11212. The engineering requirement information 12 may include a farm size 121 and a livestock type 122. The farm size 121 is greater than 1000 (numbered 1211 in the figure), and the livestock type 122 is a type A (numbered 1222 in the figure). The farm size of greater than 1000 and the livestock type of the type A may result in a requirement for two bins 111 and a motor 112, and the motor type 1121 is the variable speed 11212.

Step S16: Find a maximum common sub-graph among all graph structures, and find a maximum directional difference sub-graph between every two of the graph structures.

In this step, a graph comparator may be used to calculate the maximum common sub-graph and the maximum directional difference sub-graph between every two of the graph structures.

In a specific implementation, the maximum common sub-graph among all graph structures and the maximum directional difference sub-graph between every two of the graph structures may be directly found. Alternatively, the maximum common sub-graph between every two graph structures may be first found, and then all obtained maximum common sub-graphs between every two graph structures are compared, to obtain the maximum common sub-graph among all the graph structures. In addition, for every two graph structures, each of the two graph structures is compared with the maximum common sub-graph between the two graph structures, to obtain a maximum directional difference sub-graph of each graph structure relative to an other graph structure.

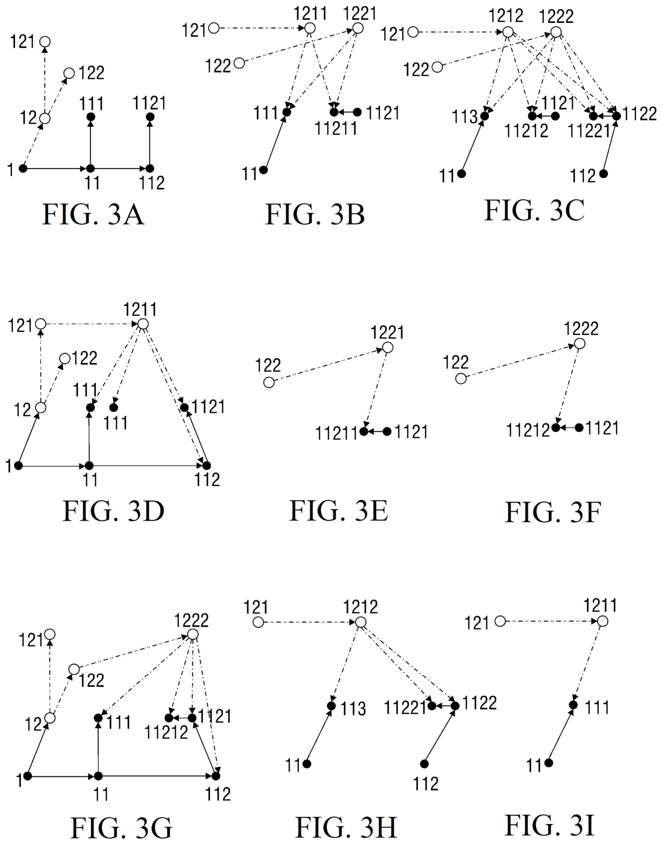

FIG. 3A to FIG. 3I show a maximum common sub-graph and a maximum directional difference sub-graph obtained based on comparison of every two of graph structures of three "feeding line" engineering projects shown in FIG. 2A to FIG. 2C in an example. As shown in FIG. 3A to FIG. 3I, FIG. 3A is a maximum common sub-graph between a graph structure of the engineering project A shown in FIG. 2A and a graph structure of the engineering project B shown in FIG. 2B, FIG. 3B is a maximum directional difference sub-graph of the graph structure of the engineering project A shown in FIG. 2A relative to the graph structure of the engineering project B shown in FIG. 2B, and FIG. 3C is a maximum directional difference sub-graph of the graph structure of the engineering project B shown in FIG. 2B relative to the graph structure of the engineering project A shown in FIG. 2A. FIG. 3D is a maximum common sub-graph between a graph structure of the engineering project A shown in FIG. 2A and a graph structure of the engineering project C shown in FIG. 2C, FIG. 3E is a maximum directional difference sub-graph of the graph structure of the engineering project A shown in FIG. 2A relative to the graph structure of the engineering project C shown in FIG. 2C, and FIG. 3F is a maximum directional difference sub-graph of the graph structure of the engineering project C shown in FIG. 2C relative to the graph structure of the engineering project A shown in FIG. 2A. FIG. 3G is a maximum common sub-graph between a graph structure of the engineering project B shown in FIG. 2B and a graph structure of the engineering project C shown in FIG. 2C, FIG. 3H is a maximum directional difference sub-graph of the graph structure of the engineering project B shown in FIG. 2B relative to the graph structure of the engineering project C shown in FIG. 2C, and FIG. 3I is a maximum directional difference sub-graph of the graph structure of the engineering project C shown in FIG. 2C relative to the graph structure of the engineering project B shown in FIG. 2B.

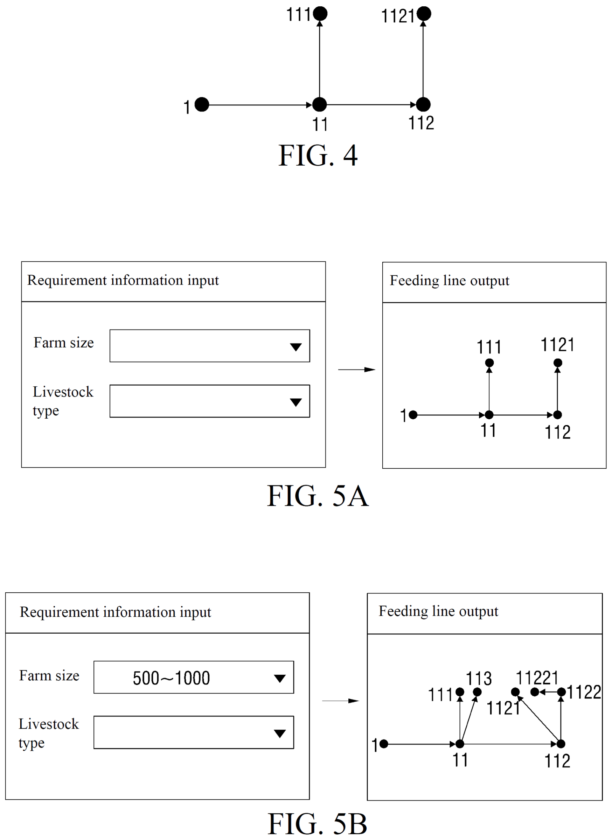

The maximum common sub-graphs in FIG. 3A, FIG. 3D, and FIG. 3G are further compared, to obtain the maximum common sub-graph among all graph structures shown in FIG. 4. As shown in FIG. 4, for the three engineering projects shown in FIG. 2A to FIG. 3C, regardless of engineering requirement information, the engineering equipment information in the engineering project includes at least one bin 111 and one motor 112, and the motor 112 always has an attribute of a motor type 1121.

Step S18: Determine a basic engineering template based on the maximum common sub-graph among all graph structures, determine, based on the maximum directional difference sub-graphs, at least one correspondence between an engineering object serving as an input condition and an engineering object serving as an output result, and determine a candidate extended branch of the basic engineering template based on each correspondence.

In this step, the basic engineering template may be determined based on the maximum common sub-graph among all the graph structures. In a specific implementation, for the maximum common sub-graph among the graph structures of the foregoing three "feeding line" engineering projects, an engineering equipment information part thereof may be used as the basic engineering template, or the maximum common sub-graph may be directly used as the basic engineering template.

For the graph structures of the foregoing three "feeding line" engineering projects, when the candidate extended branch of the basic engineering template is determined based on each of the maximum directional difference sub-graphs, the maximum directional difference sub-graphs may be further compared to obtain a correspondence between the engineering requirement information and the engineering equipment information. The engineering requirement information is the engineering object serving as the input condition, and the engineering equipment information is the corresponding engineering object serving as the output result.

For example, it may be obtained based on the maximum directional difference sub-graphs shown in FIG. 3B and FIG. 3C that:
1. when a farm size is greater than 1000, and a livestock type is a type B:
   1.1 2 bins are arranged; and
   1.2 a motor type is a constant speed; and
2. when the farm size ranges from 500 to 1000, and the livestock type is a type A:
   1.1 1 sensor is arranged;
   1.2 the motor type is a variable speed; and
   1.3 a motor has a motor protocol, and the motor protocol is an Ethernet protocol.

It may be obtained based on the maximum directional difference sub-graphs shown in FIG. 3E and FIG. 3F that:
1. when the farm size is greater than 1000:
   1.1 2 bins are arranged;
2. when a livestock type is a type B:
   1.1 the motor type is a constant speed; and
3. when the livestock type is the type A:
   1.1 the motor type is the variable speed.

It may be obtained based on the maximum directional difference sub-graphs shown in FIG. 3H and FIG. 3I that:
1. when the farm size ranges from 500 to 1000:
   1.1 1 sensor is arranged;
   1.2 the motor has a motor protocol, and the motor protocol is an Ethernet protocol;
   and
2. when the farm size is greater than 1000:
   1.1 2 bins are arranged.

Through cross-comparison of the maximum directional difference sub-graphs, the following correspondence between requirement information and equipment information may be easily obtained:
1. when the farm size is greater than 1000:
   1.1 2 bins are arranged.
2. when the farm size ranges from 500 to 1000:
   1.1 1 sensor is arranged;
   1.2 the motor has a motor protocol, and the motor protocol is an Ethernet protocol; and
3. when the livestock type is the type A:
   1.1 the motor type is the variable speed; and
4. when the livestock type is the type B:
   1.1 the motor type is a constant speed.

The foregoing four correspondences may respectively be used as candidate extended branches of the basic engineering template shown in FIG. 4. For example, when the input condition is that "the farm size is greater than 1000", a branch of equipment information corresponding to requirement information of the farm size being greater than 1000 is added based on the basic engineering template, that is, a branch with the equipment information of two bins. Certainly, the foregoing is merely an engineering template that is created based on three engineering projects in an example. In an actual application, as a quantity of engineering projects increases, a created engineering module becomes more complete and complex.

After the engineering template is created, a user may construct a new engineering project based on the engineering template. Specifically, when the user needs to construct the engineering project, the method may include: outputting a basic engineering template in response to an engineering project construction instruction with default input condition from a user; and outputting the basic engineering template and a corresponding extended branch in response to an engineering project construction instruction with an input condition from the user, where the extended branch includes an engineering object serving as an output result that corresponds to an engineering object serving as the input condition. The foregoing example is still used as an example for description below. FIG. 5A to FIG. 5D are each a schematic diagram of constructing an engineering project based on an engineering template in this embodiment in an example.

As shown in FIG. 5A, when a user constructs an engineering project without inputting any requirement information, a system outputs a basic engineering template.

As shown in FIG. 5B, when the user constructs the engineering project by inputting requirement information of a farm size ranging from 500 to 1000, the system outputs a basic engineering template, and adds an extended branch based on the basic engineering template. The extended branch includes 1 sensor and motor protocol attribute, and a configuration where a motor protocol is an Ethernet protocol.

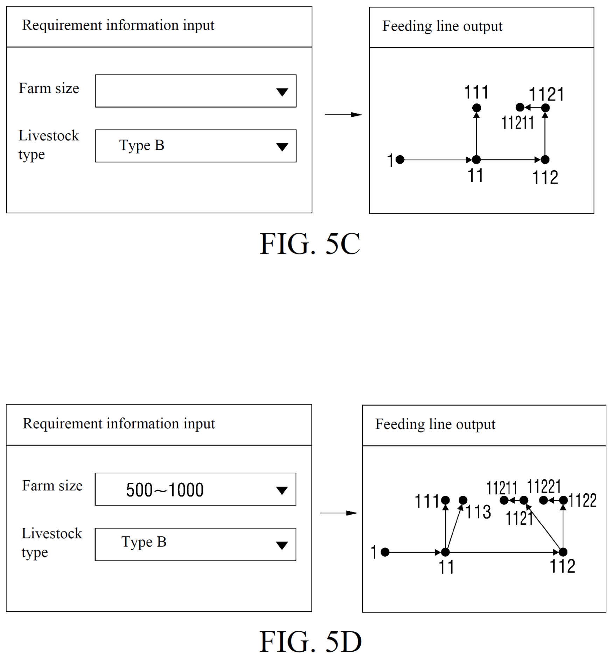

As shown in FIG. 5C, when the user constructs the engineering project by inputting requirement information of a livestock type of a type B, the system outputs a basic engineering template, and adds an extended branch based on the basic engineering template. The extended branch includes a configuration where a motor type is a constant speed.

As shown in FIG. 5D, when the user constructs an engineering project by inputting requirement information of the farm size ranging from 500 to 1000 and the livestock type of a type B, a system outputs a basic engineering template, and adds two extended branches based on the basic engineering template. One of the extended branches includes 1 sensor and motor protocol attribute, and a configuration where a motor protocol is an Ethernet protocol. The other extended branch includes a configuration where the motor type is the constant speed.

It may be learned that the constructed engineering project shown in FIG. 5D includes a combination of requirements that does not exist in the engineering projects shown in FIG. 2A and FIG. 2C. It may be learned that according to the technical solutions in the embodiments of this application, an engineering template may be created based on an existing engineering project, and more engineering projects may be extended based on the engineering template.

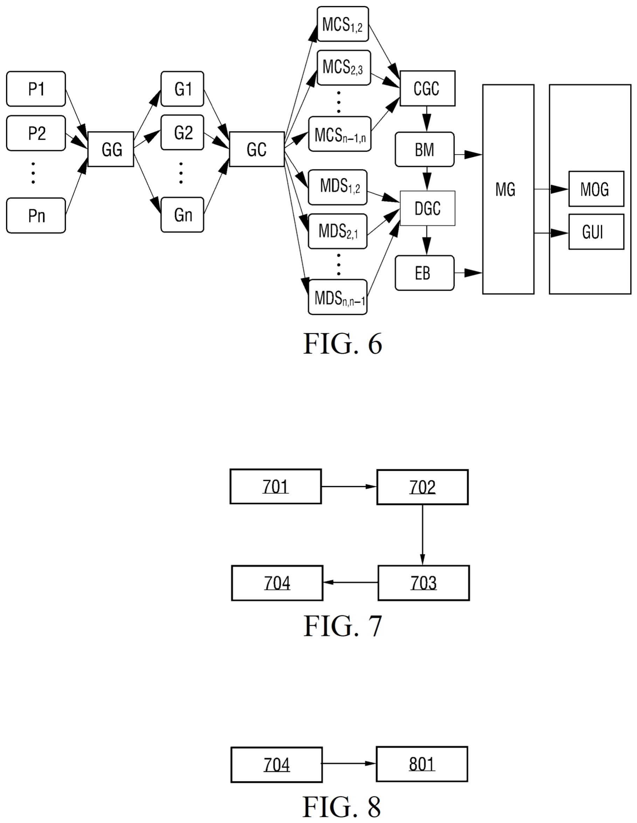

FIG. 6 is a flowchart of a detailed implementation of an engineering template creation process and an engineering project construction process in an example of this application. As shown in FIG. 6, in an engineering project P1 to an engineering project Pn, a corresponding graph structure G1 to a corresponding graph structure Gn are generated through a graph generator GG. The graph structure G1 to the graph structure Gn are compared in pairs through a graph comparator GC, to obtain a corresponding maximum common sub-graph MCS_{1, 2} to a corresponding maximum common sub-graph MCS_{n-1, n}, and a maximum directional difference sub-graph MDS_{1, 2} to a maximum directional difference sub-graph MDS_{n, n-1}. The maximum common sub-graph MCS_{1, 2} to the maximum common sub-graph MCS_{n-1, n} are further compared through a common sub-graph comparator CGC, to obtain and provide a basic engineering template BM to a template generator MG. The maximum directional difference sub-graph MDS_{1, 2} to the maximum directional difference sub-graph MDS_{n, n-1} are further compared through a difference sub-graph comparator DGC, to obtain and provide a candidate extended branch EB of the basic engineering template BM to the template generator MG. Then, a user interacts with the template generator MG through an input device with a human-computer interaction interface (GUI). In response to an engineering project construction instruction with default input condition indicated by the user through the input device, the template generator MG provides the basic engineering template BM to a template output generator MOG of the input device, to output the basic engineering template BM. When the user inputs a corresponding input condition through a requirement information GUI of the input device, in response to the engineering project construction instruction with the input condition from the user, the template generator MG provides the basic engineering template BM and the corresponding extended branch EB to the template output generator MOG of the input device, to output the basic engineering template BM and the corresponding extended branch EB.

The engineering template creation method in the embodiments of the present invention is described in detail above, and the engineering template creation apparatus in the embodiments of the present invention is described in detail below. The engineering template creation apparatus in the embodiments of the present invention may be configured to implement the engineering template creation method in the embodiments of the present invention. For details that are not disclosed in detail in apparatus embodiments of the present invention, reference may be made to the corresponding descriptions in the method embodiments of the present invention.

FIG. 7 is an exemplary structural diagram of an engineering template creation apparatus according to an embodiment of the present invention. As shown in FIG. 7, the apparatus may include a first module 701, a second module 702, a third module 703, and a fourth module 704.

The first module 701 is configured to obtain a plurality of engineering projects between which a similarity meets a set requirement. In an example, the predetermined comparison items may include an engineering software library, an engineering function, an engineering object, and/or an engineering parameter used in each of the engineering projects. Correspondingly, the engineering projects between which the result of the comparison meets the set requirement may be: engineering projects that use a same engineering software library, implement a same engineering function, have more than a set first quantity of same engineering objects, and/or have more than a set second quantity of same engineering parameters; and/or engineering projects that do not use a standard engineering software library, implement the same engineering function, have more than the set first quantity of same engineering objects, and/or have more than the set second quantity of same engineering parameters.

The second module 702 is configured to generate a graph structure for each of the engineering projects. The graph structure includes a node that represents each engineering object in the engineering project and an arrow that represents a mapping relationship between the engineering objects. In an example, an engineering object may include engineering equipment information, engineering equipment attribute information, engineering equipment configuration information engineering requirement information. A mapping relationship between the engineering objects may include: a mapping relationship between the engineering equipment information and the engineering equipment attribute information, a mapping relationship between the engineering equipment attribute information and the engineering equipment configuration information, a mapping relationship between the engineering requirement information and the engineering equipment information, a mapping relationship between the engineering requirement information and the engineering equipment attribute information a mapping relationship between the engineering requirement information and the engineering equipment configuration information.

The third module 703 is configured to find a maximum common sub-graph among all graph structures, and a maximum directional difference sub-graph between every two of the graph structures. In an implementation, the maximum common sub-graph between every two graph structures may be first found, and then all obtained maximum common sub-graphs between every two graph structures are compared, to obtain the maximum common sub-graph among all the graph structures. In addition, for every two graph structures, each of the two graph structures is compared with the maximum common sub-graph between the two graph structures, to obtain a maximum directional difference sub-graph of each graph structure relative to an other graph structure.

The fourth module 704 is configured to determine a basic engineering template based on the maximum common sub-graph; and determine, based on the maximum directional difference sub-graphs, at least one correspondence between an engineering object serving as an input condition and an engineering object serving as an output result, and determine a candidate extended branch of the basic engineering template based on each correspondence.

FIG. 8 is an exemplary structural diagram of an engineering project construction apparatus according to an embodiment of the present invention. As shown in FIG. 8, the apparatus may include the fourth module 704 shown in FIG. 7 and a fifth module 801.

The fifth module 801 is configured to output a basic engineering template in response to an engineering project construction instruction with default input condition from a user, and output the basic engineering template and a corresponding extended branch in response to an engineering project construction instruction with an input condition from the user, where the extended branch includes an engineering object serving as an output result that corresponds to an engineering object serving as the input condition.

In fact, the engineering template creation apparatus provided in this implementation of this application may be specifically implemented in various manners. For example, an ecological design evaluation apparatus may be compiled, through an application programming interface that conforms to a specific rule, into a plug-in installed in an intelligent terminal, or may be encapsulated into an application program for a user to download and use.

When the apparatus is compiled into the plug-in, the engineering template creation apparatus may be implemented in a plurality of plug-in forms, such as ocx, dll, and cab. The ecological design evaluation apparatus provided in this implementation of this application may also be implemented through a specific technology, for example, a Flash plug-in technology, a RealPlayer plug-in technology, an MMS plug-in technology, an MIDI staff plug-in technology, or an ActiveX plug-in technology.

The engineering template creation method provided in this implementation of this application may be stored in various storage media in an instruction storage manner or an instruction set storage manner. The storage media include, but are not limited to: a floppy disk, an optical disk, a DVD, a hard disk, a flash memory, a USB flash memory, a CF card, an SD card, an SDHC card, an MMC card, an SM card, a memory stick, and an xD card.

It should be clear that an operating system operating in a computer may implement some or all actual operations not only by executing program code read by the computer from a storage medium, but also by using instructions based on the program code, to implement the function of any embodiment in the foregoing embodiments.

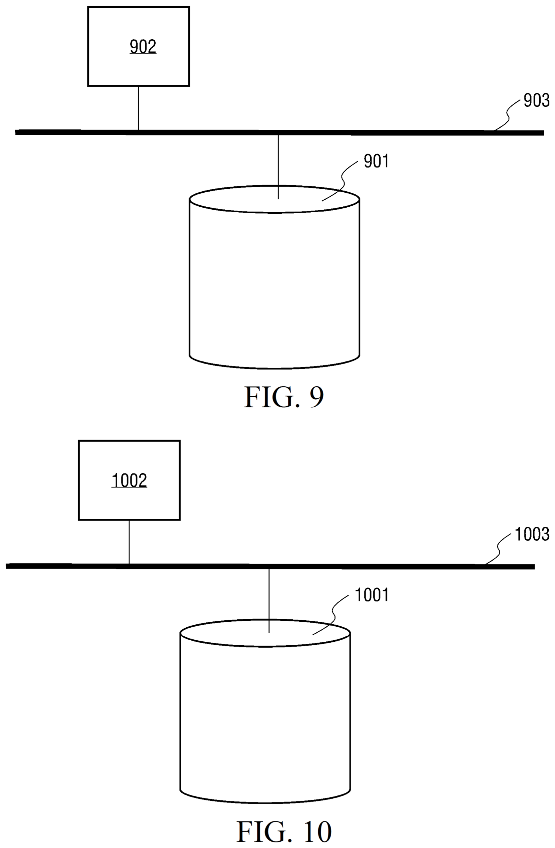

For example, FIG. 9 is an exemplary structural diagram of another engineering template creation apparatus according to an embodiment of this application. The apparatus may be configured to perform the method shown in FIG. 1, or configured to implement the apparatus in FIG. 7. As shown in FIG. 9, the apparatus may include at least one memory 901 and at least one processor 902. In addition, some other components may further be included, for example, a communication port, an input/output controller, and a network communication interface. These components perform communication through a bus 903 and the like.

The at least one memory 901 is configured to store a computer program. In an example, the computer program may be understood as including various modules of the apparatus shown in FIG. 7. In addition, the at least one memory 901 may store an operating system and the like. The operating system includes but is not limited to an Android operating system, a Symbian operating system, a Windows operating system, a Linux operating system, and the like.

The at least one processor 902 is configured to invoke a computer program stored in the at least one memory 901, to perform the engineering template creation method described in the embodiments of this application. The processor 902 may be a CPU, a processing unit/module, an application-specific integrated circuit (ASIC), a logical module, a programmable gate array, or the like, and may receive and send data through the communication port.

FIG. 10 is an exemplary structural diagram of another engineering project construction apparatus according to an embodiment of this application. The apparatus may be configured to perform a corresponding engineering project construction method, or configured to implement the apparatus in FIG. 8. As shown in FIG. 10, the apparatus may include at least one memory 1001 and at least one processor 1002. In addition, some other components may further be included, for example, a communication port, an input/output controller, and a network communication interface. These components perform communication through a bus 1003 and the like.

The at least one memory 1001 is configured to store a computer program. In an example, the computer program may be understood as including various modules of the apparatus shown in FIG. 8. In addition, the at least one memory 1001 may store an operating system and the like. The operating system includes but is not limited to an Android operating system, a Symbian operating system, a Windows operating system, a Linux operating system, and the like.

The at least one processor 1002 is configured to invoke a computer program stored in the at least one memory 1001, to perform the engineering project construction method described in the embodiments of this application. The processor 1002 may be a CPU, a processing unit/module, an ASIC, a logical module, a programmable gate array, or the like, and may receive and send data through the communication port.

It should be understood that "and/or" used herein is intended to include any or all possible combinations of one or more associated listed items.

A quantity of embodiments of this application is merely for description, and does not represent advantages of the embodiments.

It may be learned from the foregoing technical solutions that in the embodiments of this application, a plurality of engineering projects between which a similarity meets a set requirement is predetermined, a maximum common sub-graph is found based on graph structures of the engineering projects, a maximum directional difference sub-graph is obtained through comparison of every two of the graph structures, then the maximum common sub-graph is used as a basic engineering template, a correspondence between an engineering object serving as an input condition and an engineering object serving as an output result is determined based on the maximum directional difference sub-graph, a candidate extended branch of the basic engineering template is determined based on the correspondence, and then a new engineering project may be constructed based on the basic engineering template and the extended branch, thereby implementing modular engineering. In addition, since the engineering template is constructed based on an existing engineering project, not only the existing engineering project is fully used, but also automatic creation of templates is implemented, thereby reducing dependence of engineering template creation on technical personnel such as experts.

The foregoing descriptions are merely exemplary embodiments of this application, but are not intended to limit this application. Any modification, equivalent replacement, improvement, or the like made without departing from the spirit and principle of this application shall fall within the protection scope of this application.

## Claims

1. An engineering template creation method, comprising:
obtaining a plurality of engineering projects between which a similarity meets a set requirement;
generating a graph structure for each of the engineering projects, wherein the graph structure comprises a node that represents each engineering object in the engineering project and an arrow that represents a mapping relationship between the engineering objects;
finding a maximum common sub-graph among all graph structures, and a maximum directional difference sub-graph between every two of the graph structures;
determining a basic engineering template based on the maximum common sub-graph; and
determining, based on the maximum directional difference sub-graphs, at least one correspondence between an engineering object serving as an input condition and an engineering object serving as an output result, and determining a candidate extended branch of the basic engineering template based on each correspondence.

2. The method according to claim 1, wherein the obtaining a plurality of engineering projects between which a similarity meets a set requirement comprises:
comparing the engineering projects for predetermined comparison items, and determining, as the engineering projects between which the similarity meets the set requirement, the engineering projects between which a result of the comparison meets the set requirement.

3. The method according to claim 2, wherein the predetermined comparison items comprise an engineering software library, an engineering function, an engineering object, and an engineering object and/or an engineering parameter used in each of the engineering projects; and
the engineering projects between which the result of the comparison meets the set requirement are: engineering projects that use a same engineering software library, implement a same engineering function, have more than a set first quantity of same engineering objects, and/or have more than a set second quantity of same engineering parameters; and/or engineering projects that do not use a standard engineering software library, implement the same engineering function, have more than the set first quantity of same engineering objects, and/or have more than the set second quantity of same engineering parameters.

4. The method according to claim 1, wherein the finding a maximum common sub-graph among all graph structures comprises:
finding the maximum common sub-graph between every two of the graph structures; and
comparing all the obtained maximum common sub-graphs, to obtain the maximum common sub-graph among all the graph structures.

5. The method according to claim 1, wherein the finding a maximum directional difference sub-graph between every two of the graph structures comprises:
finding, for every two of the graph structures, a maximum common sub-graph between the two graph structures; and
comparing each of the two graph structures with the maximum common sub-graph between the two graph structures, to obtain a maximum directional difference sub-graph of each graph structure relative to an other graph structure.

6. The method according to any one of claims 1 to 5, wherein the engineering object comprises engineering equipment information, engineering equipment attribute information, engineering equipment configuration information, and engineering requirement information; and
the mapping relationship between the engineering objects comprises: a mapping relationship between the engineering equipment information and the engineering equipment attribute information, a mapping relationship between the engineering equipment attribute information and the engineering equipment configuration information, a mapping relationship between the engineering requirement information and the engineering equipment information, a mapping relationship between the engineering requirement information and the engineering equipment attribute information, and a mapping relationship between the engineering requirement information and the engineering equipment configuration information.

7. An engineering project construction method, comprising:
outputting a basic engineering template in response to an engineering project construction instruction with default input condition from a user; and
outputting the basic engineering template and a corresponding extended branch in response to an engineering project construction instruction with an input condition from the user, wherein the extended branch comprises an engineering object serving as an output result that corresponds to an engineering object serving as the input condition;
the basic engineering template is determined based on a maximum common sub-graph between graph structures corresponding to a plurality of engineering projects between which a similarity meets a set requirement, and a correspondence between the engineering object serving as the input condition and the engineering object serving as the output result is determined based on a maximum directional difference sub-graph between every two of graph structures corresponding to the plurality of engineering projects between which the similarity meets the set requirement.

8. An engineering template creation apparatus, comprising:
a first module (701), configured to obtain a plurality of engineering projects between which a similarity meets a set requirement;
a second module (702), configured to generate a graph structure for each of the engineering projects, wherein the graph structure comprises a node that represents each engineering object in the engineering project and an arrow that represents a mapping relationship between the engineering objects;
a third module (703), configured to find a maximum common sub-graph among all graph structures, and a maximum directional difference sub-graph between every two of the graph structures; and
a fourth module (704), configured to: determine a basic engineering template based on the maximum common sub-graph; and determine, based on the maximum directional difference sub-graphs, at least one correspondence between an engineering object serving as an input condition and an engineering object serving as an output result, and determine a candidate extended branch of the basic engineering template based on each correspondence.

9. An engineering project construction apparatus, comprising:
a fourth module (704), comprising a basic engineering template and at least one correspondence between an engineering object serving as an input condition and an engineering object serving as an output result, and configured to determine a candidate extended branch of the basic engineering template based on each correspondence, wherein the basic engineering template is determined based on a maximum common sub-graph between graph structures corresponding to a plurality of engineering projects between which a similarity meets a set requirement, and the at least one correspondence between the engineering object serving as the input condition and the engineering object serving as the output result is determined based on a maximum directional difference sub-graph between every two of graph structures corresponding to the plurality of engineering projects between which the similarity meets the set requirement; and
a fifth module (801), configured to output a basic engineering template in response to an engineering project construction instruction with default input condition from a user, and output the basic engineering template and a corresponding extended branch in response to an engineering project construction instruction with an input condition from the user, wherein the extended branch comprises an engineering object serving as an output result that corresponds to an engineering object serving as the input condition.

10. An engineering template creation apparatus, comprising at least one memory (91) and at least one processor (92), wherein
the at least one memory (91) is configured to store a computer program, and
the at least one processor (92) is configured to invoke the computer program stored in the at least one memory (91), to perform the engineering template creation method according to any one of claims 1 to 7.

11. A computer-readable storage medium, storing a computer program, wherein the computer program is executable by a processor and configured to implement the engineering template creation method according to any one of claims 1 to 6 or the engineering project construction method according to claim 7.
